# FASCICULE DE BREVET EUROPEEN

(11) **EP 2 935 935 B1**
(45) Date de publication et mention de la délivrance du brevet: **27.02.2019**
(21) Numéro de dépôt: 13821879.7
(22) Date de dépôt: 20.12.2013
(51) Int. Cl.: F16F 15/121, F16D 3/12

(54) **AMORTISSEUR DE TORSION POUR UN DISPOSITIF DE TRANSMISSION DE COUPLE D'UN VEHICULE AUTOMOBILE**
SCHWINGUNGSDÄMPFER FÜR EINE DREHMOMENTÜBERTRAGUNGSVORRICHTUNG EINES KRAFTFAHRZEUGS
VIBRATION DAMPER FOR A TORQUE TRANSMISSION DEVICE OF A MOTOR VEHICLE

(30) Priorité: 21.12.2012 FR 1262613
(43) Date de publication de la demande: 28.10.2015
(73) Titulaire: Valeo Embrayages, 80009 Amiens Cedex 2 (FR)
(72) Inventeur: LOPEZ-PEREZ, Carlos, E-28005 Madrid (ES)
(74) Mandataire: Cardon, Nicolas
(86) Numéro de dépôt international: PCT/FR2013/053218
(87) Numéro de publication internationale: WO 2014/096735

(56) Documents cités:
- EP-A1- 1 195 536
- FR-A1- 2 938 030
- US-A- 2 551 718
- US-A1- 2003 106 763

## Description

### Domaine technique de l'invention

L'invention se rapporte à un amortisseur de torsion destiné à équiper un dispositif de transmission de couple. L'invention se rapporte plus particulièrement au domaine des transmissions pour véhicule automobile.

### Etat de la technique

Dans le domaine des transmissions automobiles, il est connu de munir les dispositifs de transmission de couple d'amortisseurs de torsion permettant d'absorber et amortir les vibrations et acyclismes générés par un moteur à combustion interne.

Les amortisseurs de torsion comportent un élément d'entrée et un élément de sortie mobiles en rotation autour d'un axe de rotation commun et des moyens élastiques d'amortissement pour transmettre le couple et amortir les acyclismes de rotation entre l'élément d'entrée et l'élément de sortie.

De tels amortisseurs de torsion équipent notamment les doubles volants amortisseurs (DVA), les frictions d'embrayage, dans le cas d'une transmission manuelle ou robotisée, ou les embrayages de verrouillage, également appelés embrayages « lock-up », équipant les dispositifs d'accouplement hydraulique, dans le cas d'une transmission automatique.

Les documents FR 2894006, FR 2913256 et FR 2922620 illustrent des amortisseurs de torsion équipant respectivement un double volant amortisseur, une friction d'embrayage et un embrayage de lock-up. Les moyens élastiques d'amortissement équipant ces amortisseurs de torsion sont des ressorts hélicoïdaux, à effet circonférentiel, dont les extrémités viennent, d'une part, en appui contre des butées solidaires des éléments d'entrée et, d'autre part, en appui contre des butées solidaires des éléments de sortie. Ainsi, toute rotation d'un desdits éléments par rapport à l'autre provoque une compression des ressorts de l'amortisseur dans un sens ou dans l'autre et ladite compression exerce une force de rappel apte à rappeler lesdits éléments vers une position angulaire relative de repos. Les ressorts hélicoïdaux peuvent être droits ou cintrés.

La raideur d'un tel amortisseur est déterminée en fonction du nombre de ressorts hélicoïdaux qui le composent, de la raideur intrinsèque des ressorts et du diamètre d'implantation des ressorts. Le choix de la raideur de tels amortisseurs de torsion résulte d'un compromis entre l'efficacité de filtration des acyclismes qui augmente lorsque la raideur diminue et la capacité à transmettre le couple moteur maximum sans pour autant que les spires des ressorts viennent en butée les unes contre les autres, qui nécessite une raideur suffisante.

Afin d'améliorer les performances de filtration des vibrations à faible couple, il est connu de prévoir des amortisseurs de torsion dont la courbe caractéristique du couple transmis en fonction du débattement angulaire présente plusieurs pentes. Ainsi, à faible couple, la raideur de l'amortisseur est moindre alors que, lorsque l'on approche du couple moteur maximum à transmettre, la raideur de l'amortisseur de torsion est plus importante. Un tel amortisseur de torsion est notamment décrit dans le document EP 2157336. Toutefois, les zones de changement de raideurs provoquent des discontinuités et chocs qui nuisent à la qualité de l'amortissement des acyclismes.

Par ailleurs, les ressorts hélicoïdaux étant disposés de manière circonférentielle, ils sont extrêmement sensibles à la force centrifuge. Aussi, les éléments d'entrée et/ou de sortie doivent être équipés de moyens permettant de retenir radialement les ressorts et, ainsi, d'éviter leur éjection. Toutefois, ces moyens de retenue radiale introduisent des frottements parasitaires qui affectent la fonction d'amortissement, en bloquant les ressorts, lorsque la vitesse de rotation est trop importante. Il est certes prévu de diminuer l'effet de ces frottements parasitaires, en prévoyant des géométries complexes, des traitements de surface ou l'introduction de graisse. Toutefois, ces mesures complexifient la fabrication des amortisseurs de torsion et ne sont donc pas totalement satisfaisantes.

Enfin, le volume alloué aux ressorts hélicoïdaux étant limité, le débattement angulaire entre l'entrée et la sortie de l'amortisseur de torsion est limité, et les ressorts hélicoïdaux doivent présenter une raideur suffisante pour permettre la transmission du couple moteur maximal.

Ainsi, les amortisseurs de torsion à ressorts hélicoïdaux ne sont pas totalement satisfaisants.

### Objet de l'invention

L'invention vise à remédier à ces problèmes en proposant un amortisseur de torsion dont les performances soient accrues.

A cet effet, et selon un premier aspect, l'invention concerne un amortisseur de torsion pour dispositif de transmission de couple comportant :
- un premier élément et un second élément mobiles en rotation l'un par rapport à l'autre autour d'un axe de rotation X ; et
- des moyens d'amortissement pour transmettre un couple et amortir les acyclismes de rotation entre le premier élément et le second élément.

L'amortisseur de torsion est remarquable en ce que les moyens d'amortissement élastique comportent une lame élastique, montée solidaire du premier élément, pourvue d'une surface de came ; et ce qu'il ccomporte un suiveur de came, porté par un second élément, et agencé pour coopérer avec ladite surface de came. En outre, la surface de came est agencée de telle sorte que, pour un débattement angulaire entre le premier élément et le second élément, par rapport à une position angulaire de repos, le suiveur de came exerce un effort de flexion sur la lame élastique produisant une force de réaction contraire apte à rappeler lesdits premier et second éléments vers ladite position angulaire de repos.

Ainsi, les moyens d'amortissement sont moins sensibles à la force centrifuge que les ressorts hélicoïdaux de l'art antérieur et leur capacité d'amortissement n'est pas altérée lorsque la vitesse de rotation du moteur à combustion devient importante.

En outre, la structure d'un tel amortisseur permet d'obtenir des débattements relatifs importants.

Par ailleurs, un tel amortisseur peut présenter une courbe caractéristique représentant les variations du couple transmis en fonction du débattement angulaire qui présente des variations de pentes sans point d'inflexion ou discontinuités.

Enfin, la surface de came étant portée par la lame élastique, la fabrication d'un amortisseur selon l'invention peut être en partie standardisée. En effet, seules la géométrie et les caractéristiques de la lame nécessitent des adaptations lorsque les caractéristiques d'un amortisseur doivent être adaptées aux caractéristiques de l'application visée, et notamment au couple moteur maximum à transmettre.

Selon d'autres modes de réalisation avantageux, un tel amortisseur de torsion peut présenter une ou plusieurs des caractéristiques suivantes :
- le suiveur de came est disposé radialement à l'extérieur de la lame élastique. Une telle disposition permet de retenir radialement la lame élastique lorsqu'elle est soumise à la force centrifuge. En outre, cette disposition permet une augmentation de la raideur de la lame élastique sous l'effet de la force centrifuge.
- la surface de came est formée à une extrémité libre de la lame élastique.
- la lame comporte une portion d'orientation radiale prolongée par une portion courbe à l'extrémité libre de laquelle est formée la surface de came. Une telle structure permet d'obtenir à la fois une faible rigidité et une résistance mécanique satisfaisante.
- l'amortisseur comporte une seconde lame élastique pourvue d'une surface de came, montée solidaire du premier élément, et un second suiveur de came agencé pour coopérer avec la surface de came de ladite seconde lame élastique. Un tel agencement permet d'augmenter la capacité en couple de l'amortisseur.
- la première et la seconde lame élastique sont symétriques par rapport à l'axe de rotation X. Ainsi, l'amortisseur est équilibré.
- la première et la seconde lames élastiques sont formées dans une pièce monobloc.
- le suiveur de came est un galet monté mobile en rotation sur le second élément.
- le galet est monté mobile en rotation sur le second élément par l'intermédiaire d'un palier à roulement.

Selon un deuxième aspect, l'invention concerne un élément de transmission de couple, notamment pour véhicule automobile, comportant un amortisseur de torsion selon le premier aspect de l'invention.

Dans un mode de réalisation, l'élément de transmission de couple comporte deux amortisseurs de torsion disposés en série. Une telle disposition permet d'augmenter davantage le débattement angulaire.

Dans un autre mode de réalisation, l'élément de transmission de couple comporte deux amortisseurs de torsion disposés en parallèle. Ainsi, l'élément de transmission de couple peut présenter une capacité en couple supérieure.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

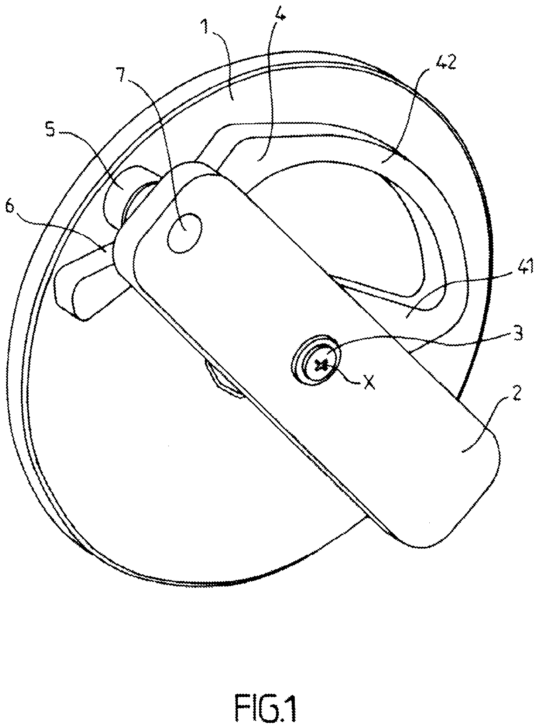

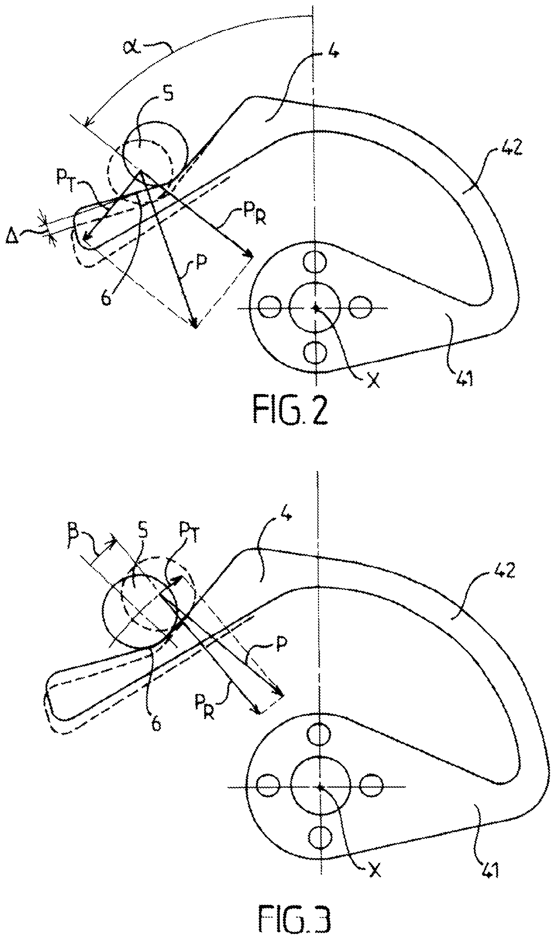

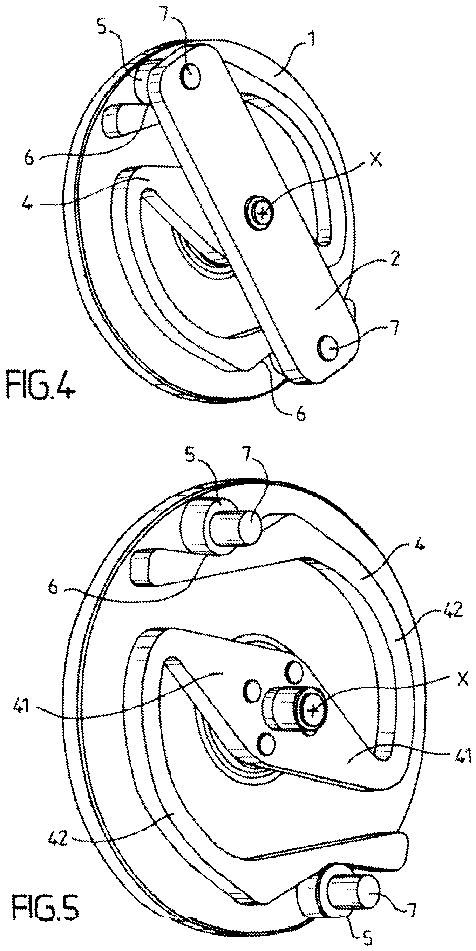

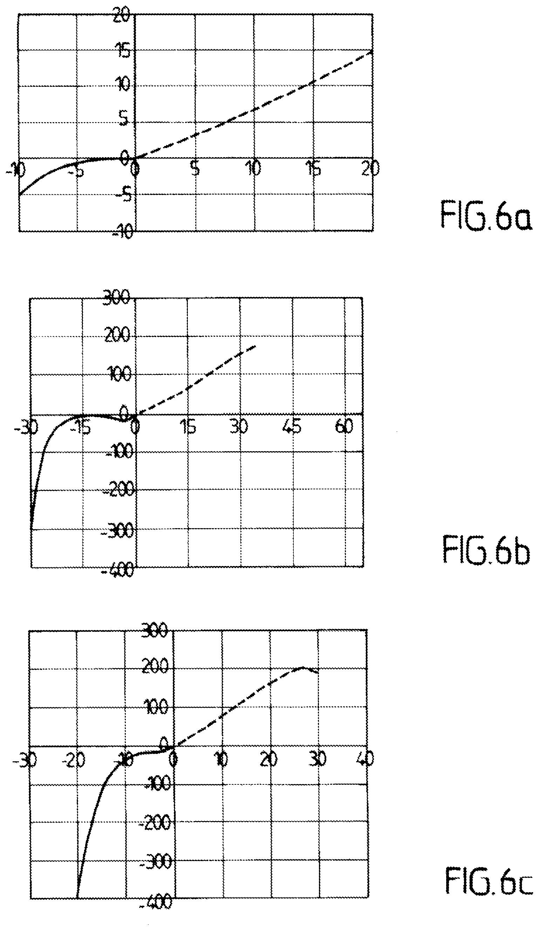

Sur ces dessins :
- **La** **figure 1** est une vue en perspective d'un amortisseur de torsion selon un premier mode de réalisation.
- **La** **figure 2** illustre le fléchissement de la lame de l'amortisseur de torsion de la figure 1 lors d'un débattement angulaire entre les éléments d'entrée et de sortie dans un sens direct.
- **La** **figure 3** illustre le fléchissement de la lame lors d'un débattement angulaire dans un sens rétro.
- **La** **figure 4** est une vue en perspective d'un amortisseur de torsion selon un second mode de réalisation.
- **La** **figure 5** illustre de manière détaillée les moyens d'amortissement de l'amortisseur de torsion de la figure 4.
- **Les** **figures 6a, 6b, 6c** illustrent des exemples de courbes caractéristiques, représentant le couple transmis en fonction du débattement angulaire, obtenues par des moyens d'amortissement conformes aux enseignements de l'invention.

L'amortisseur de torsion, illustré sur la figure 1, est destiné à être intégré à un élément de transmission de la chaîne de transmission d'un véhicule automobile. Cet élément de transmission peut par exemple être un volant moteur équipé d'un amortisseur de torsion, tel qu'un double volant amortisseur, un embrayage de lock-up d'un dispositif d'accouplement hydraulique ou une friction d'embrayage. On notera en outre que, dans le cas d'une friction d'embrayage, l'amortisseur de torsion selon l'invention peut formé un amortisseur principal et/ou un préamortisseur.

L'amortisseur de torsion comporte un élément d'entrée 1 et un élément de sortie 2 qui sont disposés, dans la chaîne de transmission, respectivement côté moteur à combustion interne et côté boîte de vitesses. A titre d'exemple, lorsque l'amortisseur de torsion selon l'invention est intégré à un double volant amortisseur, l'élément d'entrée 1 pourra être constitué ou porté par un premier volant d'inertie destiné à être fixé au bout d'un arbre menant, tel que le vilebrequin d'un moteur à combustion interne alors que l'élément de sortie 2 est constitué ou porté par un second volant d'inertie, formant, en général, plateau de réaction d'un embrayage de liaison à un arbre mené, tel que l'arbre d'entrée d'une boîte de vitesses.

Les éléments d'entrée 1 et de sortie 2 sont mobiles en rotation autour d'un axe de rotation X commun. Les éléments d'entrée et de sortie 2 sont guidés en rotation l'un par rapport à l'autre au moyen d'un palier, tel qu'un palier à roulement 3.

L'élément d'entrée 1 et l'élément de sortie 2 sont connectés en rotation par des moyens d'amortissement. Les moyens d'amortissement sont aptes à transmettre un couple entraînant de l'élément d'entrée 1 vers l'élément de sortie 2 (sens direct) et un couple résistant de l'élément de sortie 2 vers l'élément d'entrée 1 (sens rétro). D'autre part, les moyens d'amortissement développent un couple de rappel élastique tendant à rappeler l'élément d'entrée 1 et l'élément de sortie 2 dans une position angulaire relative de repos.

Les moyens d'amortissements comportent un lame élastique 4 qui est montée solidaire en rotation de l'élément d'entrée 1. La lame élastique 4 présente, à une extrémité libre, une surface de came 6 qui est agencée pour coopérer avec un suiveur de came : le galet 5, monté sur l'élément de sortie 2. La lame est conçue de sorte à pouvoir supporter des contraintes importantes, pouvant aller jusqu'à 1500 MPa. La lame élastique 4 est, par exemple, réalisée dans un acier 51CV4 ayant subie des traitements thermiques dédiés, tels qu'une trempe suivie d'un revenu.

La lame élastique 4 est fixée sur l'élément d'entrée 1 à proximité de l'axe de rotation X. La lame élastique 4 comporte une portion 41 s'étendant de manière sensiblement radiale, de sa zone de fixation à l'élément d'entrée 1 vers l'extérieur. La portion 41 est prolongée via un coude par une portion 42 courbe. La portion courbe 42 s'étend de manière sensiblement circonférentielle. Le rayon de courbure de la portion courbe 42 ainsi que la distance entre le coude, s'étendant entre la portion 41 et la portion courbe 42, sont déterminés en fonction de la raideur souhaitée de la lame élastique 4. La lame élastique 4 peut au choix être réalisée d'un seul tenant ou être composée d'une pluralité de lamelles fixées axialement les unes aux autres.

Le galet 5 est monté mobile en rotation sur l'élément de sortie 2 autour de l'axe de rotation 7. Le galet 5 est maintenu en appui contre la surface de came 6 et est agencé pour rouler contre ladite surface de came 6 lors d'un mouvement relatif entre l'élément d'entrée 1 et l'élément de sortie 2. Le galet 5 est disposé radialement à l'extérieur de la surface de came 6 de sorte à maintenir radialement la lame élastique 4 lorsqu'elle est soumise à la force centrifuge. De façon à réduire les frottements parasitaires susceptibles d'affecter la fonction d'amortissement, le galet 5 est monté en rotation sur l'élément de sortie 2 au moyen d'un palier à roulement. A titre d'exemple, le palier à roulement pourra être un roulement à billes ou à rouleaux. Dans un mode de réalisation, le galet 5 présente un revêtement anti-friction.

La figure 1 illustre l'élément d'entrée 1 et l'élément de sortie 2 dans une position angulaire relative de repos.

La surface de came 6 est agencée de telle sorte que, pour un débattement angulaire entre l'élément d'entrée et l'élément de sortie, de part et d'autre de cette position angulaire relative de repos, le galet 5 se déplace sur la surface de came 6 et, ce faisant, exerce un effort de flexion sur la lame élastique 6. Par réaction, la lame élastique 6 exerce sur le galet 5 une force de rappel qui tend à ramener les éléments d'entrée 1 et de sortie 2 vers leur position angulaire relative de repos.

La fonction de l'amortisseur de torsion sera maintenant détaillée en relation avec les figures 2 et 3.

Lorsqu'un couple moteur entraînant est transmis de l'élément d'entrée 1 vers l'élément de sortie 2 (sens direct), le couple à transmettre entraîne un débattement relatif entre l'élément d'entrée 1 et l'élément de sortie 2 selon une première direction (voir figure 2). Le galet 5 est alors déplacé d'un angle α par rapport à la lame élastique 4. Le déplacement du galet 5 sur la surface de came 6 entraîne une flexion de la lame élastique 4 selon une flèche Δ. Pour illustrer la flexion de la lame 4, la lame 4 est représentée en traits pleins dans sa position angulaire de repos et en traits pointillés lors d'un débattement angulaire.

L'effort de flexion P dépend notamment de la géométrie de la lame et de sa matière, en particulier de son module d'élasticité transversal. L'effort de flexion P se décompose en une composante radiale Pr et en une composante tangentielle Pt. La composante tangentielle Pt permet la transmission du couple moteur. En réaction, la lame élastique 4 exerce sur le galet 5 une force de réaction dont la composante tangentielle constitue une force de rappel qui tend à ramener les éléments d'entrée 1 et de sortie 2 vers leur position angulaire relative de repos.

Lorsqu'un couple résistant est transmis de l'élément de sortie 2 vers l'élément d'entrée 2 (sens rétro), le couple à transmettre entraîne un débattement relatif entre l'élément d'entrée 1 et l'élément de sortie 2 selon une seconde direction opposée (voir figure 3). Le galet 5 est alors déplacé d'un angle β par rapport à la lame élastique 4. Dans ce cas, la composante tangentielle Pt de l'effort de flexion présente une direction opposée à la composante tangentielle de l'effort de flexion illustrée sur la figure 2. De même, la lame élastique exerce une force de réaction, de direction contraire à celle illustrée sur la figure 2, de sorte à ramener les éléments d'entrée 1 et de sortie 2 vers leur position angulaire relative de repos.

Les vibrations de torsion et les irrégularités de couple qui sont produites par le moteur à combustion interne sont transmises par l'arbre menant à l'élément d'entrée 1 et génèrent également des rotations relatives entre les éléments d'entrée 1 et de sortie 2. Ces vibrations et irrégularités sont amorties par la flexion de la lame élastique 4.

Les figures 6a, 6b et 6c illustrent des courbes caractéristiques d'amortisseurs de torsion réalisées conformément aux enseignements de l'invention. La figure 6a représente la courbe caractéristique d'un pré-amortisseur destiné à équiper une friction d'embrayage alors que les figures 6a et 6b représentant les courbes caractéristiques d'amortisseurs principaux destinés à équiper des frictions d'embrayage. Ces courbes caractéristiques représentent le couple transmis, exprimé en N.m, en fonction du débattement angulaire, exprimé en degré. Le débattement relatif entre les éléments d'entrée 1 et de sortie 2, dans le sens direct, est représenté en traits pointillés alors que le débattement, dans le sens rétro est représentée en traits pleins. On note qu'un amortisseur de torsion selon l'invention permet notamment d'obtenir des courbes caractéristiques d'amortissement dont la pente varie progressivement, sans discontinuité.

De manière avantageuse, la surface de came 6 et la lame élastique 4 sont agencées de telle sorte que la fonction caractéristique du couple transmis en fonction du débattement angulaire est une fonction monotone.

En outre, la surface de came 6 et la lame élastique 4 sont agencées de telle sorte que le couple transmissible soit supérieur au couple moteur maximum lorsque le galet 5 atteint les deux extrémités du chemin de came 4.

Pour certaines applications, la surface de came 6 et la lame élastique 4 pourront être agencées de telle sorte que les caractéristiques du couple transmis en fonction du débattement angulaire, dans le sens rétro et dans le sens direct soient symétriques par rapport à la position angulaire de repos.

Les figures 4 et 5 représentent un second mode de réalisation de l'invention dans lequel l'amortisseur de torsion comporte deux lames élastiques 4. La première et la seconde lames élastiques 4 sont formées dans une pièce monobloc et symétriques par rapport à l'axe de rotation X. Chacune des lames 4 présente une surface de came 6 coopérant avec un suiveur de came 5. Une telle structure permet, d'une part, d'obtenir un amortisseur de torsion équilibré et peut, d'autre part, être avantageuse lorsque le couple moteur à transmettre est important.

Dans un mode de réalisation non illustré, un élément de transmission de couple selon l'invention est équipé de deux amortisseurs tels que décrits ci-dessus, disposés en série.

Dans un autre mode de réalisation non illustré, un élément de transmission de couple est équipé de deux amortisseurs tels que décrits ci-dessus disposés en parallèle.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. En particulier, il est évident que si, dans le mode de réalisation décrit ci-dessus, la lame élastique est montée solidaire de l'élément d'entrée et le suiveur de came est montée sur l'élément de sortie, la lame élastique peut indifféremment être montée sur l'élément de sortie alors que le suiveur de came est monté sur l'élément d'entrée.

## Revendications

1. Amortisseur de torsion pour dispositif de transmission de couple d'une chaîne de transmission d'un véhicule automobile, comportant :
- un premier élément (1) et un second élément (2) mobiles en rotation l'un par rapport à l'autre autour d'un axe de rotation X ; et
- des moyens d'amortissement pour transmettre un couple et amortir les acyclismes de rotation entre le premier élément (1) et le second élément (2) ;
ledit amortisseur étant **caractérisé en ce que** les moyens d'amortissement comportent une lame élastique (4), montée solidaire du premier élément et pourvue d'une surface de came (6) ; et **en ce que** l'amortisseur comporte un suiveur de came (5), porté par le second élément, et agencé pour coopérer avec ladite surface de came (6) ;
ladite surface de came (6) étant agencée de telle sorte que, pour un débattement angulaire entre le premier élément (1) et le second élément (2) par rapport à une position angulaire de repos, le suiveur de came (6) exerce un effort de flexion sur la lame élastique (4) produisant une force de réaction apte à rappeler lesdits premier (1) et second (2) éléments vers ladite position angulaire de repos.

2. Amortisseur de torsion selon la revendication 1, dans lequel le suiveur de came (5) est disposé radialement à l'extérieur de la lame élastique (4).

3. Amortisseur de torsion selon la revendication 1 ou 2, dans lequel la surface de came (6) est formée à une extrémité libre de la lame élastique (4).

4. Amortisseur de torsion selon la revendication 3, dans lequel la lame comporte une portion (41) d'orientation radiale prolongée par une portion courbe (42) à l'extrémité libre de laquelle est formée la surface de came (6).

5. Amortisseur de torsion selon l'une quelconque des revendications 1 à 4, comportant une seconde lame élastique (4) pourvue d'une surface de came (6), montée solidaire du premier élément, et un second suiveur de came (5) agencé pour coopérer avec la surface de came (6) de ladite seconde lame élastique (4).

6. Amortisseur de torsion selon la revendication 5, dans lequel la première et la seconde lames élastiques (4) sont symétriques par rapport à l'axe de rotation X.

7. Amortisseur de torsion selon la revendication 5 ou 6, dans lequel la première et la seconde lames élastiques (4) sont formées dans une pièce monobloc.

8. Amortisseur de torsion selon l'une quelconque des revendications 1 à 7, dans lequel le suiveur de came est un galet (5) monté mobile en rotation sur le second élément (2).

9. Amortisseur de torsion selon la revendication 8, dans lequel le galet (5) est monté mobile en rotation sur le second élément (2) par l'intermédiaire d'un palier à roulement.

10. Amortisseur de torsion selon la revendication 8 ou 9, dans lequel la surface de came (6) et la lame élastique (4) sont agencées de telle sorte que le couple transmissible soit supérieur au couple moteur maximum lorsque le galet (5) atteint les deux extrémités du chemin de came (4).

11. Elément de transmission de couple, notamment pour véhicule automobile, comportant un amortisseur de torsion selon l'une des revendications 1 à 10.

12. Elément de transmission de couple selon la revendication 11, comportant deux amortisseurs de torsion selon l'une quelconque des revendications 1 à 10, disposés en série.

13. Elément de transmission de couple selon la revendication 11 ou 12, comportant deux amortisseurs de torsion selon l'une quelconque des revendications 1 à 10, disposés en parallèle.

## Patentansprüche

1. Torsionsdämpfer für eine Drehmomentübertragungsvorrichtung eines Antriebsstranges eines Kraftfahrzeugs, welcher aufweist:
- ein erstes Element (1) und ein zweites Element (2), die relativ zueinander drehbeweglich um eine Drehachse X sind; und
- Dämpfungsmittel zum Übertragen eines Drehmoments und Dämpfen der Drehungleichförmigkeiten zwischen dem ersten Element (1) und dem zweiten Element (2); wobei der Dämpfer **dadurch gekennzeichnet ist, dass** die Dämpfungsmittel ein elastisches Plättchen (4) aufweisen, das mit dem ersten Element fest verbunden ist und mit einer Nockenfläche (6) versehen ist; und dadurch, dass der Dämpfer einen Nockenfolger (5) aufweist, der von dem zweiten Element getragen wird und dafür ausgelegt ist, mit der Nockenfläche (6) zusammenzuwirken;
wobei die Nockenfläche (6) derart beschaffen ist, dass bei einer Winkelauslenkung zwischen dem ersten Element (1) und dem zweiten Element (2) in Bezug auf eine Ruhewinkelposition der Nockenfolger (6) eine Biegekraft auf das elastische Plättchen (4) ausübt, die eine Gegenkraft erzeugt, die geeignet ist, das erste (1) und das zweite Element (2) in die Ruhewinkelposition zurückzubewegen.

2. Torsionsdämpfer nach Anspruch 1, wobei der Nockenfolger (5) radial außerhalb des elastischen Plättchens (4) angeordnet ist.

3. Torsionsdämpfer nach Anspruch 1 oder 2, wobei der Nockenfolger (6) an einem freien Ende des elastischen Plättchens (4) ausgebildet ist.

4. Torsionsdämpfer nach Anspruch 3, wobei das Plättchen einen radial ausgerichteten Abschnitt (41) aufweist, der durch einen gekrümmten Abschnitt (42) verlängert ist, an dessen freiem Ende die Nockenfläche (6) ausgebildet ist.

5. Torsionsdämpfer nach einem der Ansprüche 1 bis 4, welcher ein mit einer Nockenfläche (6) versehenes zweites elastisches Plättchen (4) aufweist, das mit dem ersten Element fest verbunden ist, und einen zweiten Nockenfolger (5), der dafür ausgelegt ist, mit der Nockenfläche (6) des zweiten elastischen Plättchens (4) zusammenzuwirken.

6. Torsionsdämpfer nach Anspruch 5, wobei das erste und das zweite elastische Plättchen (4) symmetrisch bezüglich der Drehachse X sind.

7. Torsionsdämpfer nach Anspruch 5 oder 6, wobei das erste und das zweite elastische Plättchen (4) als ein einstückiges Teil ausgebildet sind.

8. Torsionsdämpfer nach einem der Ansprüche 1 bis 7, wobei der Nockenfolger eine Rolle (5) ist, die an dem zweiten Element (2) drehbeweglich angebracht ist.

9. Torsionsdämpfer nach Anspruch 8, wobei die Rolle (5) über ein Wälzlager drehbeweglich an dem zweiten Element (2) angebracht ist.

10. Torsionsdämpfer nach Anspruch 8 oder 9, wobei die Nockenfläche (6) und das elastische Plättchen (4) derart beschaffen sind, dass das übertragbare Drehmoment größer als das maximale Motordrehmoment ist, wenn die Rolle (5) die beiden Enden der Nockenbahn (4) erreicht.

11. Drehmomentübertragungselement, insbesondere für ein Kraftfahrzeug, welches einen Torsionsdämpfer nach einem der Ansprüche 1 bis 10 aufweist.

12. Drehmomentübertragungselement nach Anspruch 11, welches zwei Torsionsdämpfer nach einem der Ansprüche 1 bis 10 aufweist, die in Reihe angeordnet sind.

13. Drehmomentübertragungselement nach Anspruch 11 oder 12, welches zwei Torsionsdämpfer nach einem der Ansprüche 1 bis 10 aufweist, die parallel angeordnet sind.

## Claims

1. A vibration damper for a torque transmission device of a transmission train of a motor vehicle comprising:
- a first element (1) and a second element (2) which are rotatable relative to each other around an axis of rotation X; and
- damping means for transmitting a torque and damping the rotational acyclisms between the first element (1) and the second element (2);
said damper being **characterized in that** the damping means comprise an elastic blade (4) mounted securely on the first element and provided with a cam surface (6); and **in that** the damper comprises a cam follower (5) carried by the second element and arranged to cooperate with said cam surface (6);
said cam surface (6) being arranged such that, for an angular travel between the first element (1) and the second element (2) relative to an angular rest position, the cam follower (6) exerts a flexion force on the elastic blade (4) producing a reaction force able to return said first (1) and second (2) elements to said angular rest position.

2. The vibration damper as claimed in claim 1, wherein the cam follower (5) is arranged radially outside the elastic blade (4).

3. The vibration damper as claimed in claim 1 or 2, wherein the cam surface (6) is formed at a free end of the elastic blade (4).

4. The vibration damper as claimed in claim 3, wherein the blade comprises a portion (41) of radial orientation extended by a curved portion (42), at the free end of which the cam surface (6) is formed.

5. The vibration damper as claimed in any of claims 1 to 4, comprising a second elastic blade (4) provided with a cam surface (6) and mounted securely on the first element, and a second cam follower (5) arranged to cooperate with the cam surface (6) of said second elastic blade (4).

6. The vibration damper as claimed in claim 5, wherein the first and second elastic blades (4) are symmetrical relative to the axis of rotation X.

7. The vibration damper as claimed in claim 5 or 6, wherein the first and second elastic blades (4) are formed from a single piece.

8. The vibration damper as claimed in any of claims 1 to 7, wherein the cam follower is a roller (5) mounted rotatably on the second element (2).

9. The vibration damper as claimed in claim 8, wherein the roller (5) is mounted rotatably on the second element (2) via a roller bearing.

10. The vibration damper as claimed in claim 8 or 9, wherein the cam surface (6) and the elastic blade (4) are arranged such that the transmissible torque is greater than the maximum engine torque when the roller (5) reaches the two ends of the cam track.

11. A torque transmission element, in particular for a motor vehicle, comprising a vibration damper as claimed in any of claims 1 to 10.

12. The torque transmission element as claimed in claim 11, comprising two vibration dampers as claimed in any of claims 1 to 10, arranged in series.

13. The torque transmission element as claimed in claim 11 or 12, comprising two vibration dampers as claimed in any of claims 1 to 10, arranged in parallel.
